# EUROPEAN PATENT APPLICATION

(11) **EP 2 698 975 A1**
(43) Date of publication of application: **19.02.2014**
(21) Application number: 12770655.4
(22) Date of filing: 07.03.2012
(51) Int. Cl.: H04M 11/00, G06Q 30/06, H02J 7/00, H04M 1/00

(54) **CHARGING RESERVATION SUPPORT SYSTEM, MOBILE TERMINAL DEVICE, CHARGING RESERVATION SUPPORT METHOD AND PROGRAM**

(30) Priority: 13.04.2011 JP 2011089034
(71) Applicant: NEC CASIO Mobile Communications, Ltd., Kawasaki-shi Kanagawa 211-8666 (JP)
(72) Inventor: HAMA, Riichiro, Kawasaki-shi, Kanagawa 211-8666 (JP)
(74) Representative: Vossius & Partner
(86) International application number: PCT/JP2012/001556
(87) International publication number: WO 2012/140826

(57) **Abstract**

[PROBLEM TO BE SOLVED] When charge reservation of a mobile terminal device is performed, information that is used to reduce the burden of a user is provided for the user, and charge reservation that is appropriate for the user can be realized.

[SOLUTION] A management server device 5 that is included in a charge reservation support system includes a charge reservation database DB that is used to manage a charge reservation status that includes an installation location and a reservation time for each mobile phone 1, searches the charge reservation database DB on the basis of the current position of the mobile phone 1, generates reservation support information that is related to charge reservation from charge reservation statuses of a plurality of the charge stands 2 that exist at location near the current position, and transmits the reservation support information to the mobile phone 1 that is the inquiry source when an inquiry of a charge reservation status is received from the mobile phone 1

## Description

### TECHNICAL FIELD

The present invention relates to a charge reservation support system that performs reservation support when charging of a mobile terminal device is reserved, a mobile terminal device, a charge reservation support method, and a program.

### BACKGROUND ART

Generally, in a contactless charge device that employs a contactless charging process (non-contact charging process) in accordance with the WPC (Wireless Power Consortium), for example, an electromagnetic induction process as a charge device that charges a secondary battery that is mounted on a mobile terminal device (mobile phone, etc.), there are various advantages in which the waterproof and dustproof structure can be obtained without a risk of a short because a metal electrode is not necessary, and the orientation in which the mobile terminal device is put (connected) is not needed to be cared. It is conceivable that such a contactless charge device is installed in a facility such as a fast food shop and a restaurant in addition to the usage for an individual user and used, for example, to perform charging on the sidelines of meal and rest by a general user.

Even in a case in which the charge device that is installed in such a facility is configured so that a plurality of mobile terminal devices as well as one mobile terminal can be charged at the same time, when the number of terminals that are charged reaches the maximum amount to be charged, an additional terminal is not allowed to be charged, and it is necessary that the user waits until charging of any of the terminals is completed or finds another facility in which a charge device is installed, so that a large burden is applied to the user. Therefore, conventionally, there is known a mobile terminal device that guides the nearest facility in which a charge device is installed (see Patent Document 1). That is, in the technology of Patent document 1, when a remaining battery of the mobile terminal device is reduced, charge reservation is requested to a management server that manages a plurality of charge devices that are installed at various locations through a network, the management server notifies the mobile terminal device that is a request source of guidance of an available charge device that is currently not being used, using the current position of the mobile terminal device as a reference.

### PRIOR ART DOCUMENT

### PATENT DOCUMENT

Patent Document 1: JP 2003-348757

### SUMMARY OF INVENTION

### Problem to be Solved by the Invention

However, in the above-described technology (the technology in Patent Document 1), the mobile terminal device is notified of guidance of an available charge device that is currently not being used, using the current position of the mobile terminal device as a reference, however, even in a case in which the guided charge device is available now, when next reservation waits for the guided charge device, it is probable that the number of terminals reaches the maximum amount after the user came to a facility in which the guided charge device is installed, so that the user has to find another facility. In addition, even when the nearest facility is guided, a direction opposite to the traveling direction of the user is guided or the user has to take a detour, so that the user may not be able to use the guidance.

An object of the present invention is to provide information that is used reduce the burden of the user and realize charge reservation that is appropriate for the user when charge reservation for the mobile terminal device is performed.

### Means for Solving the Problem

In order to solve the above-described problems, a charge reservation support system of the present invention is a charge reservation support system which comprises charge devices which are installed at a plurality of locations, a mobile terminal device which comprises a charge function to charge a secondary battery by electric power supply from the charge device, and a management device which manages each of the charge devices, and performs reservation support when charging of the mobile terminal device is reserved, the charge reservation support system comprises:
a reservation management means for managing a charge reservation status including an installation location and a reservation time for each of the charge devices;
a generation means for, when an inquiry regarding a charge reservation status is received from the mobile terminal device, searching for the charge reservation status based on a current position of the mobile terminal device, and generating reservation support information related to charge reservation from charge reservation statuses of a plurality of charge devices present at locations near the current position; and
a transmission means for transmitting the reservation support information generated by the generation means to the mobile terminal device which is an inquiry source.

A mobile terminal device of the present invention is a mobile terminal device which comprises a charge function to charge a secondary battery by electric power supply from a charge device, the mobile terminal device comprising:
a position obtaining means for obtaining a current position of the mobile terminal device;
an inquiry means for making an inquiry regarding a charge reservation status by transmitting the current position obtained by the position obtaining means to a management device which manages a charge reservation status including an installation location and a reservation time for each of charge devices installed at a plurality of locations;
an obtaining means for receiving and obtaining reservation support information related to charge reservation including installation locations and reservation times of a plurality of charge devices present at locations near the current position of the inquiry source in response to the inquiry regarding the charge reservation status made by the inquiry means, from the management device; and
an output means for outputting the reservation support information received and obtained by the obtaining means.

A charge reservation support method of the present invention is a charge reservation support method for performing reservation support when charging of a mobile terminal device comprising a charge function to charge a secondary battery by electric power supply from a charge device is reserved, the charge reservation support method comprising:
managing a charge reservation status including an installation location and a reservation time for each of charge devices installed at a plurality of locations;
searching for, when an inquiry regarding a charge reservation status is received from the mobile terminal device, the charge reservation status based on a current position of the mobile terminal device and generating reservation support information related to charge reservation from charge reservation statuses of a plurality of charge devices present at locations near the current position; and
transmitting the generated reservation support information to the mobile terminal device which is an inquiry source.

A charge reservation support method of the present invention is a charge reservation support method for performing reservation support when charging of a mobile terminal device comprising a charge function to charge a secondary battery by electric power supply from a charge device is reserved, the charge reservation support method comprising:
making an inquiry regarding a charge reservation status by transmitting a current position of the mobile terminal device to a management device which manages a charge reservation status including an installation location and a reservation time for each of charge devices installed at a plurality of locations;
receiving and obtaining reservation support information related to charge reservation including installation locations and reservation times of a plurality of charge devices present at locations near the current position of the inquiry source in response to the inquiry regarding the charge reservation status, from the management device; and
outputting the received and obtained reservation support information.

A program of the present invention is a program which causes a computer to actualize functions comprising:
a function for managing a charge reservation status including an installation location and a reservation time for each of charge devices installed at a plurality of locations;
a function for, when an inquiry regarding a charge reservation status is received from a mobile terminal device, searching for the charge reservation status based on a current position of the mobile terminal device and generating reservation support information related to charge reservation from charge reservation statuses of a plurality of charge devices present at locations near the current position; and
a function for transmitting the generated reservation support information to the mobile terminal device which is an inquiry source.

A program of the present invention is a program which causes a computer to actualize functions comprising:
a function for making an inquiry regarding a charge reservation status by transmitting a current position of a mobile terminal device to a management device which manages a charge reservation status including an installation location and a reservation time for each of charge devices installed at a plurality of locations;
a function for receiving and obtaining reservation support information related to charge reservation including installation locations and reservation times of a plurality of charge devices present at locations near the current position of the inquiry source in response to the inquiry regarding the charge reservation status, from the management device; and
a function for outputting the received and obtained reservation support information.

### Effect of the Invention

In the present invention, when making a charge reservation for a mobile terminal device, information can be supplied to reduce a user' s burden and enable the user to achieve a suitable charging reservation, thus having high utilization value.

### BRIEF DESCRIPTION OF DRAWINGS

FIG. 1 is a block diagram illustrating the whole overview of a communication network system (a mobile phone communication system and a charge reservation support system) in which a mobile phone that is applied as a mobile terminal device can be used.
FIG. 2 is a block diagram illustrating basic configuration elements of a mobile phone 1.
FIG. 3 is a block diagram illustrating basic configuration elements of a charge device (charge stand) 2.
FIG. 4 is a block diagram illustrating basic configuration elements of a management server device 5.
FIG. 5 is a diagram illustrating a state in which the mobile phone 1 is mounted on (connected to) the charge stand 2.
FIG. 6 is a diagram that is used to explain a charge reservation database DB that is provided on the management server device 5 side.
FIG. 7 is a flowchart illustrating charge reservation processing on the mobile phone 1 side.
FIG. 8 is a flowchart illustrating charge reservation processing on the management server device 5 side.
FIG. 9 (1) to (3) are flowcharts illustrating operations of the mobile phone 1, the charge stand 2, and the management server device 5 at the time of charging.
FIG. 10 is a diagram illustrating a message screen that is used to ask a user whether or not the nearest charge stand 2 is to be searched for
FIG. 11 is a diagram illustrating a reservation support screen on which reservation support information that is received and obtained from the management server device 5 is displayed.
FIG. 12 is a diagram illustrating a message screen in a case in which charging is not allowed in the charge stand 2 in which the mobile phone 1 is mounted (connected).
FIG. 13 is a diagram illustrating a message screen in a case in which charging is allowed in the charge stand 2 in which the mobile phone 1 is mounted (connected).
FIG. 14 is a diagram illustrating a message screen in a case in which reservation time elapses in the charge stand 2 in which the mobile phone 1 is mounted (connected).
FIG. 15 is a configuration diagram of Supplementary Note 1.
FIG. 16 is a configuration diagram of Supplementary Note 4.

### DESCRIPTION OF EMBODIMENTS

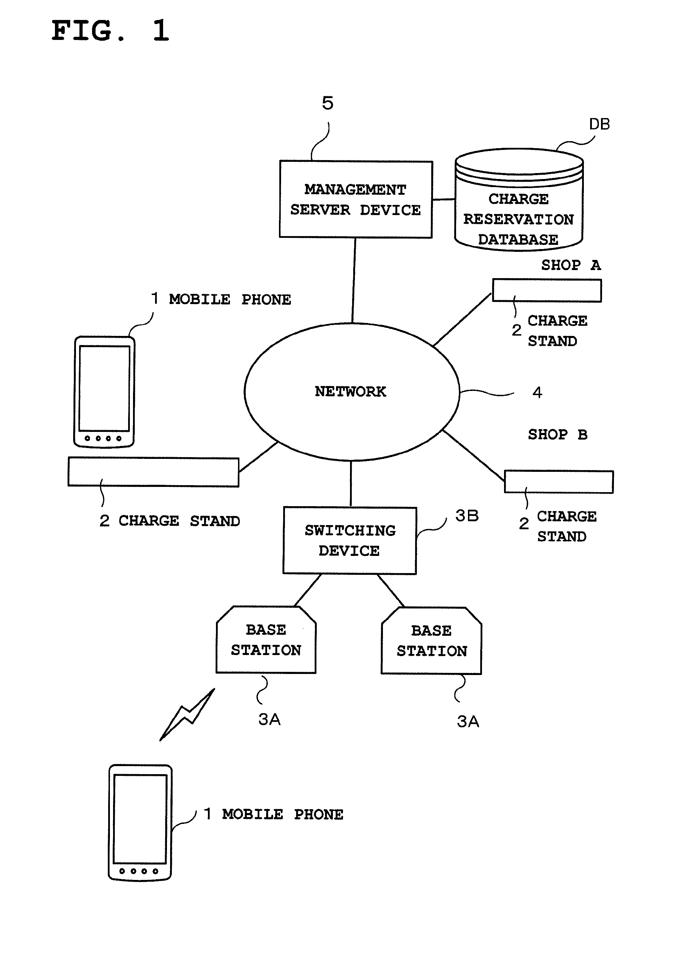

The embodiments of the present invention are described below with reference to FIG. 1 to FIG. 14.

In the embodiments, a case is exemplified in which a mobile phone is applied as a mobile terminal device, and FIG. 1 is a block diagram illustrating the whole overview of a communication network system (a mobile phone communication system and a charge reservation support system) in which such a mobile phone can be used.

The mobile phone 1 is, for example, a freely foldable mobile phone in which two housings (operation section housing and display section housing) are installed so as to be allowed to be opened and closed, and such a foldable type mobile phone 1 includes an audio call function, an e-mail function, an internet connection function (web access function), etc., and charging of the mobile phone 1 is performed by mounting (connecting) the mobile phone 1 in the charge stand (mounted type charge device) 2.

When the mobile phone 1 is connected to a network 4 such as a radio communication network and the Internet through a nearest base station 3A and a switching device 3B, the mobile phone 1 is in a state of being allowed to perform a call with another mobile phone (not illustrated) through the network 4. In addition, in the mobile phone 1, through the network 4, an e-mail can be transmitted and received, and a web page can be browsed. The charge stand 2 is a charge device of a non-contact charging process (for example, electromagnetic induction process), which is installed in various facilities such as a fast food shop, a restaurant, a community center, and a library, and the whole enclosure of the charge stand 2 is formed in the shape of a flat plate, and the charge stand 2 can charge the plurality (for example, two) of mobile phones 1 that are mounted on the top surface (mounting surface), at the same time, is connected to a commercial power source through a power source cable (not illustrated), and is connected to the management server device (management device) 5 through the network 4.

The management server device 5 is, for example, a server device on the side of a carrier that provides a charge reservation support service and is connected to each of the charge stands 2 that are installed over the country through the network 4. The management server device 5 includes the reservation database DB that stores a charge reservation status that includes the installation location and the reservation time for each of the charge stands 2, and generates reservation support information that is related to charge reservation from the charge reservation status for each of the charge stands 2 in response to the inquiry by referring to the charge reservation database DB when an inquiry of a charge reservation status is received from any of the mobile phone 1 through the network 4, and supports the charge reservation by transmitting the reservation support information to the mobile phone 1 that is the inquiry source as guidance information.

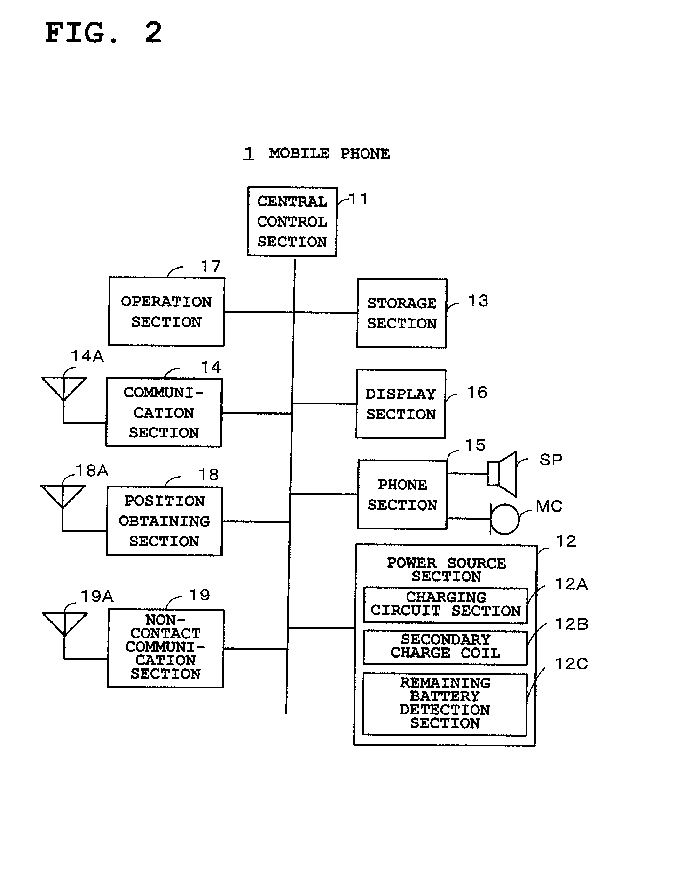

FIG. 2 is a block diagram illustrating basic configuration elements of the mobile phone 1.

The mobile phone 1 includes a central control section 11 as the core, and a power source section 12, a storage section 13 , a communication section 14 , a phone section 15, a display section 16, an operation section 17, a position obtaining section 18, and a non-contact communication section 19 are connected to the central control section 11. The central control section 11 operates by electric power supply from the power source section 12 that includes a secondary battery (not illustrated), and includes a central arithmetic processing device that controls the whole operation of the mobile phone 1 in accordance with various programs in the storage section 13 and a memory (not illustrated). The power source section 12 includes a charging circuit section 12A and performs charging of the secondary battery in the power source section 12 by the non-contact charging process with the charge stand 2 in a state in which the mobile phone 1 is mounted on (connected to) the charge stand 2. In addition, the power source section 12 includes a secondary charge coil 12B that is used for charging by the non-contact charging process (electromagnetic induction process) and a remaining battery detection section 12C that detects a battery capacity (% of remaining battery) by a well-known method.

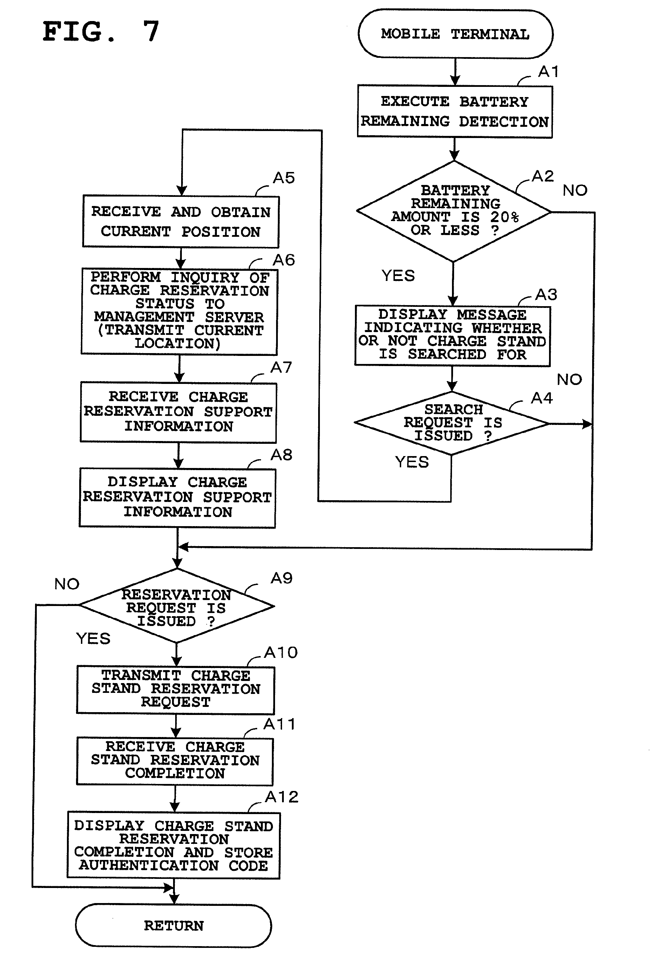

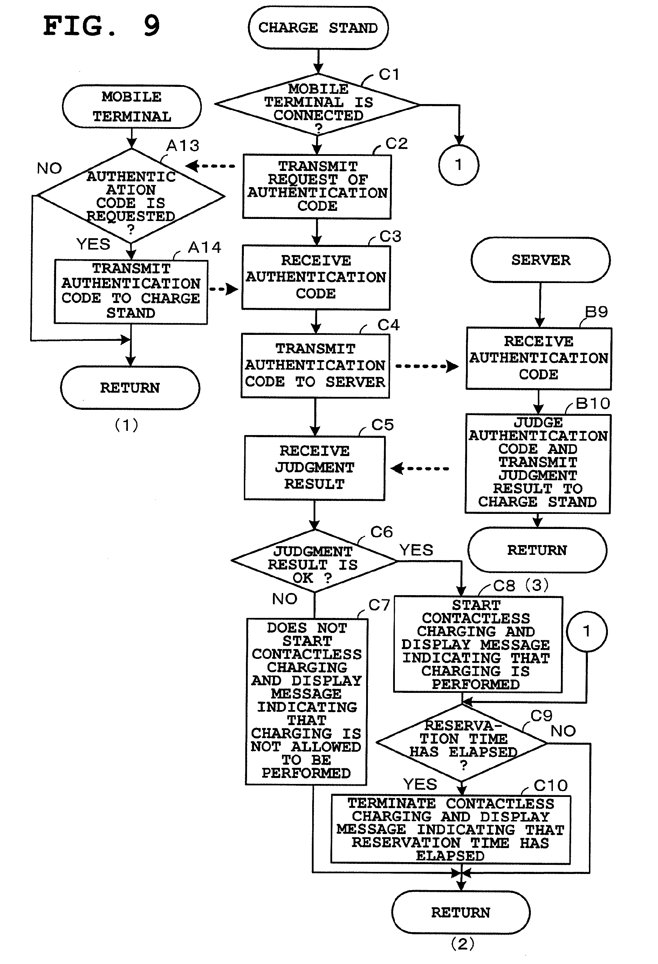

The storage section 13 includes, for example, a ROM, a RAM, etc. , stores a program that are used to realize the embodiments in accordance with operation procedures illustrated in FIG. 7 and FIG. 9 (1), which are described later, and information that is desired for the realization, and temporarily stores various pieces of information such as flag information, which are desired to operate the mobile phone 1. It is noted that the storage section 13 may be configured to include a removable portable memory (recording media) such as an SD card and an IC card, and may include a storage area on a certain external server that is not illustrated.

The communication section 14 is constituted by an RF circuit, a modulation/demodulation circuit, a baseband processing circuit, etc., modulates audio and data, transmits the modulated audio and data through an antenna 14A as radio waves, receives radio waves through the antenna 14A, and demodulates the radio waves into audio and data to perform calling and data communication. At the time of calling, the phone section 15 outputs audio from a call speaker SP and takes in input audio data from a call microphone MC. The display section 16 displays, for example, reservation support information that is related to the above-described charge reservation in addition to a standby image, an icon, date and time information, text data, a mail, a web page, etc. using a high-definition liquid crystal and an organic electro luminescent. A touch operation section (transparent touch panel) that detects finger touch is laminated and disposed on the surface of the display section 16, and includes, for example, a touch screen (touch display) of any of systems such as a capacitance system, a resistive film system, and a piezoelectric system.

The operation section 17 performs dial input, character input, command input, etc., and includes keys (not illustrated) such as a power source on/off key, numeric keys, character keys, function keys. The central control section 11 executes processing in accordance with an input operation signal from the operation section 17. The position obtaining section 18 receives and obtains the current position (longitude and latitude) of the own mobile phone 1 through antenna 18A using a GPS (global positioning system), and the central control section 11 transmits the current position of the mobile phone 1, which is received and obtained by the position obtaining section 18 to the management server device 2 when an inquiry of the charge reservation status is performed with the management server device 2. The non-contact communication section 19 performs transmission and reception of data with the charge stand 2 though antenna 19A by the non-contact communication in a state in which the mobile phone 1 is mounted on the charge stand 2, and includes, for example, a non-contact type short range communication means such as a non-contact IC card and a Bluetooth (registered trademark).

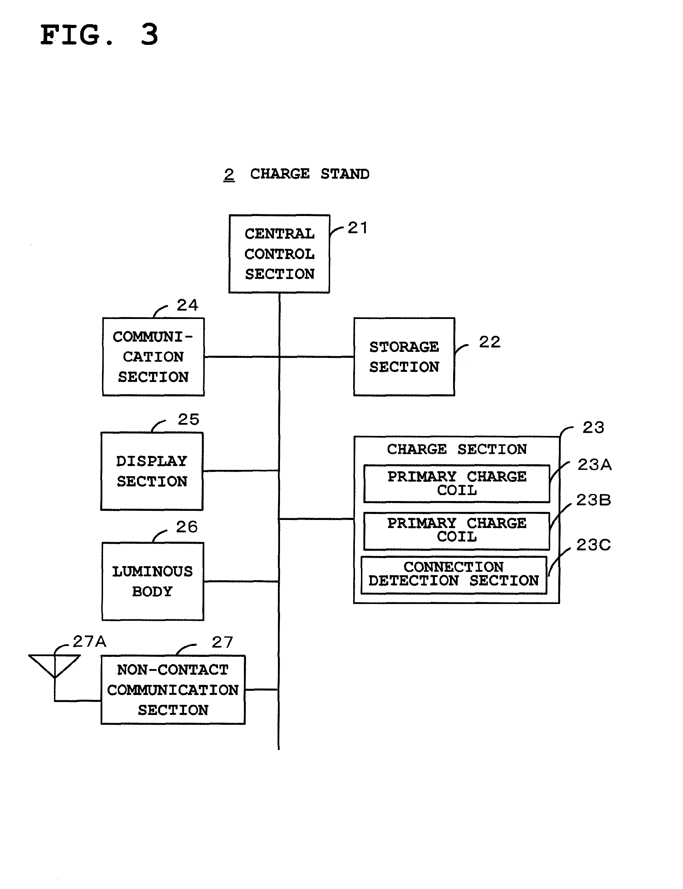

FIG. 3 is a block diagram illustrating basic configuration elements of a charge stand 2.

The charge stand 2 includes a central control section 21 as the core, and operates by electric power that is supplied from a commercial power source (not illustrated), etc. The central control section 21 controls the whole operation of the charge stand 2 in accordance with various programs in a storage section 22, and includes a central arithmetic processing device, a memory (not illustrated), etc. In addition, the storage section 22 stores a program that is used to realize the embodiments in accordance with an operations procedure illustrated in FIG. 9 (2), which is described later, and information that is desired for the realization.

A charge section 23 performs charging of the mobile phone 1 by the non-contact charging process (for example, electromagnetic induction process) in the state in which the mobile phone is mounted on (connected to) the charge stand 2, and includes a plurality (two in the illustrated example) of primary charge coils 23A and 23B, and a connection detection section 23C. The charge section 23 induces electric power in the secondary charge coil 12B (see FIG. 2) on the mobile phone 1 side by high-frequency magnetic field that is generated from the primary charge coils 23A and 23B with the mobile phone 1 by the electromagnetic induction process in the state in which the mobile phone 1 is mounted on the charge stand 2, and causes the secondary battery on the mobile phone 1 side to be charged by the electromotive force.

The connection detection section 23C detects a state in which the mobile phone 1 is mounted on (connected to) the charge stand 2 and detects the mounting state by for example, a pressure-sensitive sensor, etc., however the configuration is not limited. In addition, a communication section 24 performs transmission and reception of data to and from the management server device 5 through the network 4 in the state in which the mobile phone 1 is mounted on (connected to) the charge stand 2, and the central control section 21 controls the charge section 23 to start and end the charging operation when a charging control signal is received from the management server device 5 through the communication section 24. That is, the operation of the charge section 23 is controlled under the control of the management server device 5.

A display section 25 displays a message that includes a charging state, etc., and a luminous body 26 is provided in the vicinity of the display section 25. The luminous body 26 clearly indicates that the charging is being performed by being turned on and is constituted by a light emitting diode. A non-contact communication section 27 performs transmission and reception of data to and from the mobile phone 1 through antenna 27A by the non-contact communication in the state in which the mobile phone 1 is mounted on the charge stand 2, and is constituted by, for example, a non-contact type short range communication means such as a non-contact IC card and the Bluetooth (registered trademark).

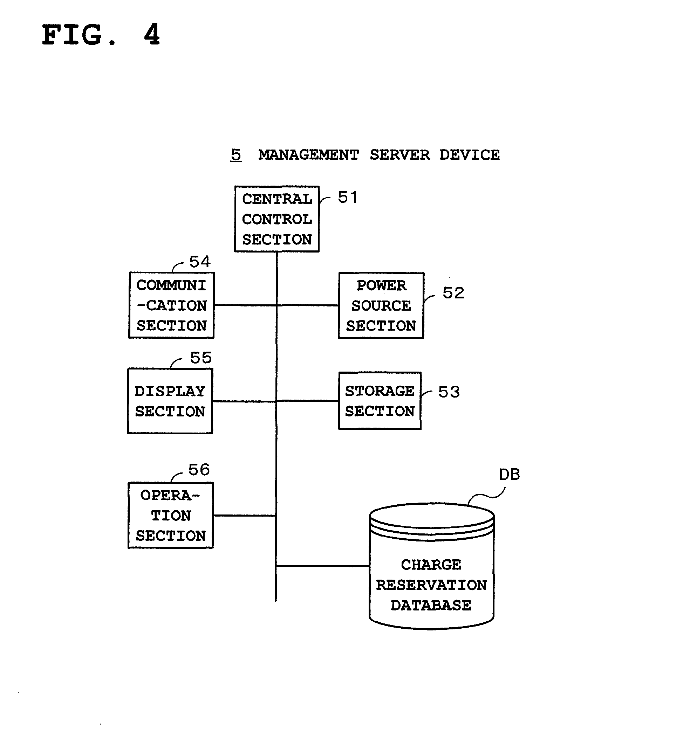

FIG. 4 is a block diagram illustrating basic configuration elements of the management server device 5.

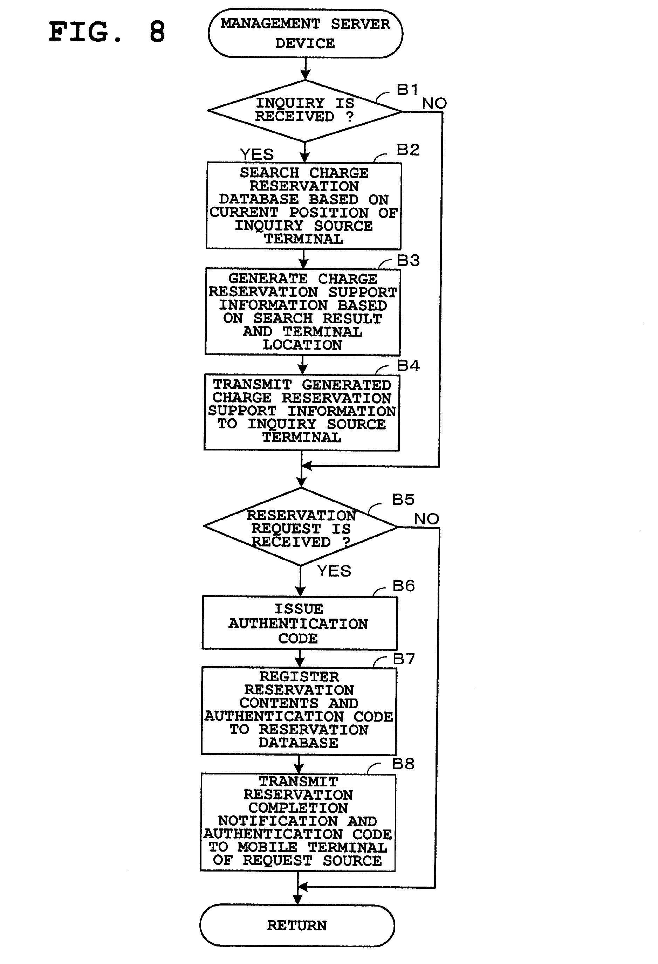

The management server device 5 includes a central control section 51, a power source section 52, a storage section 53, a communication section 54, a display section 55, and an operation section 56, and the detailed description is omitted because the server device having the well-known configuration is used, however, the storage section 53 stores a program that realizes the embodiment in accordance with operation procedures illustrated in FIG. 8 and FIG. 9 (3), which are described later, and information that is desired for the realization, etc.

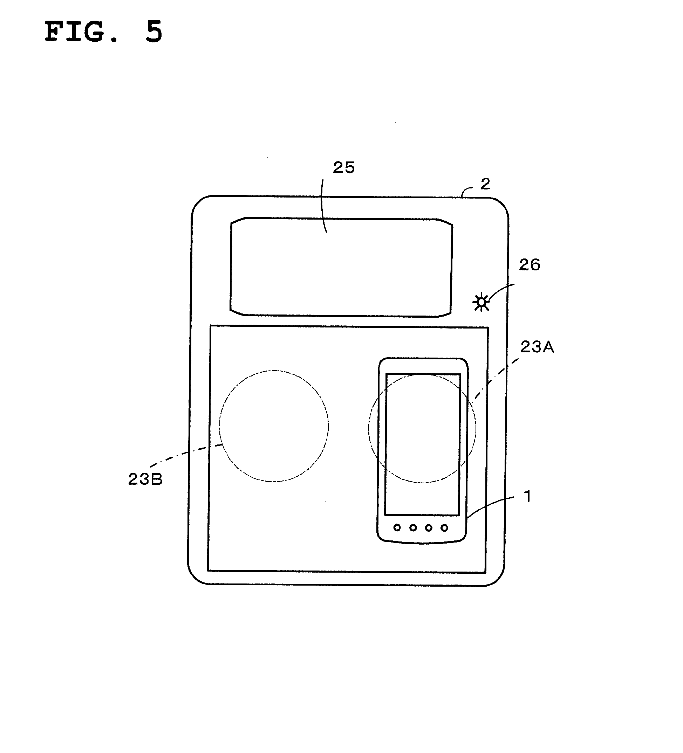

FIG. 5 is a diagram illustrating a state in which the mobile phone 1 is mounted on (connected to) the charge stand 2.

The whole housing of the charge stand 2 is constituted by a thin-type rectangular plate, and the top surface of the charge stand 2 is a mounting surface on which the mobile phone 1 is mounted at the time of charging of the mobile phone 1, and on the mounting surface, the display section 25 and the luminous body 26 are disposed and a plurality of primary charge coils 23A and 23B that constitutes the charge section 23 are disposed. In the charge stand 2, the two mobile phones 1 can be charged at the same time, and alternatively, the number of mobile phones is optional, the three mobile phones or more may be able to be charged. It is noted that, in the mounting surface of the charge stand 2, two mounting areas are distinguished by having different the base colors.

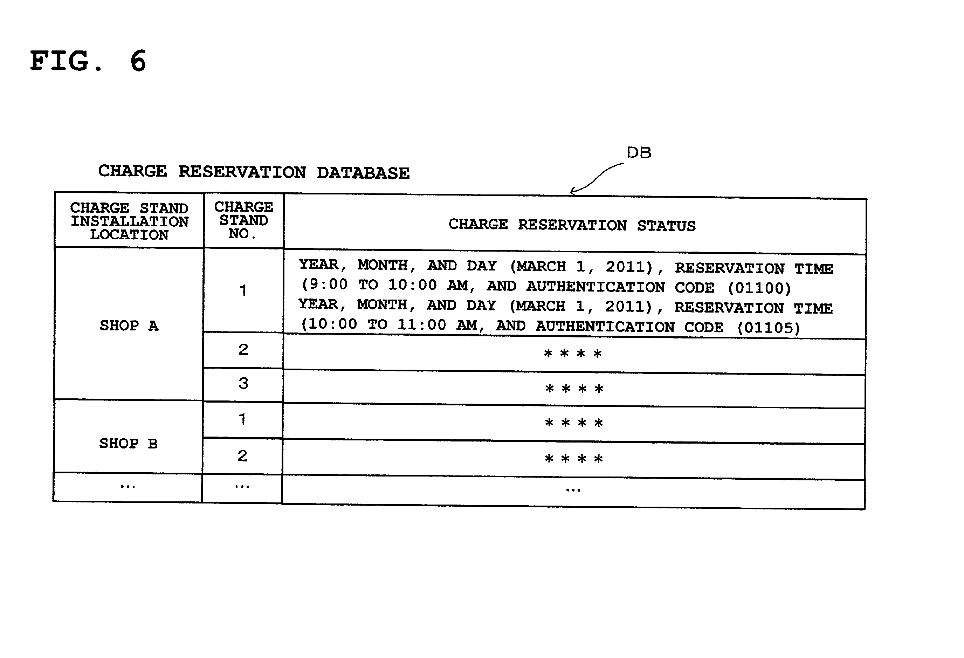

FIG. 6 is a diagram that is used to explain the charge reservation database DB that is provided on the management server device 5 side.

The charge reservation database DB stores the charge reservation status for each of the charge stands 2 that are installed at various facilities such as a fast food shop, a restaurant, a community center, and a library, and includes items of "charge stand installation location", "charge stand No.", and "charge reservation status". "Charging installation location" is an item in which the location (facility name) at which the charge stand 2 is installed, and in the illustrated example, "shop A", "shop B" are stored. "Charge stand No." is an item in which identification number (first machine, second machine, etc.) that identifies the charge stands 2 that are installed in the facility, and in the illustrated example, "1", "2", ... are stored.

"Charge reservation status" stores a reservation time (for example, time section) and an authentication code for each reservation date (year, month, and day), and for example, when "charge stand installation location" is "shop A" and "charge stand No. is "1", in accordance with "April 5, 2011", "9:00 to 10:00 am" as the reservation time and "01100" as the authentication code are stored, and "10:00 to 11:00 am" as the reservation time and "01105" as the authentication code are stored. The authentication code is issued to the mobile phone 1 at the time of reservation in order to confirm that the reservation is valid at the time of charging (the mobile phone 1).

It is noted that, in the illustrated example, the time section is used as the reservation time, and it depends on a speed of the charging, and alternatively, the time section may be, for example, 30 minute section or 10 minute section regardless of the time section. In addition, as the reservation time, a user-specified time that is optionally specified from the mobile phone 1, for example, 11:05 to 11:15 pm may be employed in addition to a fixed time that is set beforehand, that is, each of the hour sections, and each 30 minute section. In addition, the mobile phone 1 may calculate an hour until which a remaining battery capacity that is detected using a remaining battery capacity detection function is fully charged, and transmit the calculated time to the management server device 5 as a scheduled time. In addition, any of the above-described three types, that is, the user-specified time, the fixed time, and the hour section the full charging is completed may be optionally selected by the user.

An operation concept of the charge reservation support system in the embodiment is described below with reference to the flowcharts illustrated in FIG. 7 to FIG. 9. Here, functions that are described in these flowcharts are stored in the form of readable program codes, and operations in accordance with the program codes are sequentially executed.

FIG. 7 and FIG. 8 are flowcharts illustrating charge reservation processing that is executed between the mobile phone 1 and the management server device 5, and the charge reservation processing is sequentially executed and started at each certain timing, and when the process leaves the flow of the FIG. 7 and FIG. 8, the process returns to the main flow (not illustrated). It is noted that FIG. 7 is a flowchart illustrating the charge reservation processing on the mobile phone 1 side, and FIG. 8 is a flowchart illustrating the charge reservation processing on the management server device 5 side.

First, the mobile phone 1 detects and obtains a battery capacity (% of remaining battery) that is detected by the remaining battery detection section 12C (Step A1 in FIG. 7), checks whether or not the remaining battery is 20% or less, that is, battery exhaustion is coming soon (Step A2). Here, when the remaining battery exceeds 20%, that is, the battery exhaustion is not coming soon (NO in the Step A2), the process proceeds to a Step A9 in order to skip charge reservation support processing (Steps A5 to A8) that is described later, and when the remaining battery is 20% or less, that is, the battery exhaustion is coming soon (YES in the Step A2), a message screen that is used to ask the user whether or not the nearest charge stand 2 is searched for is displayed on the display section 16 (Step A3).

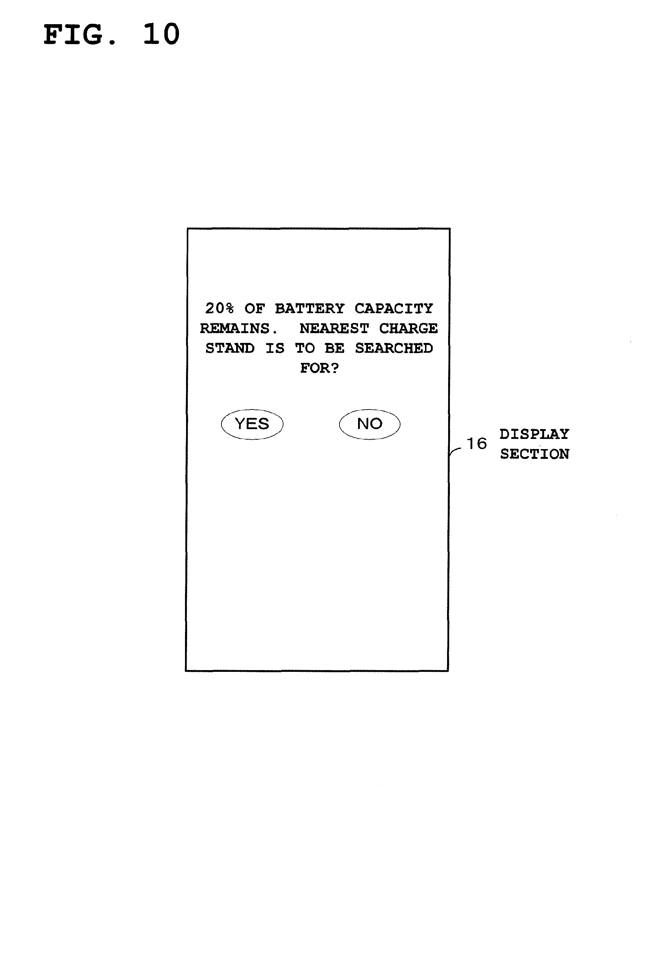

FIG. 10 is a diagram illustrating such a message screen, and on the message screen, a message of "20% of the battery capacity remains. The nearest charge stand is to be searched for?" is displayed and software keys (YES/NO buttons) are arranged and displayed. Here, the user performs a touch operation of the software key (YES button) when a search request of the charge stand 2 is issued, and performs a touch operation of the software key (NO button) when the search request of the charge stand 2 is not issued. Here, when the touch operation of the software key (NO button) is performed and the search request is not issued (NO in the Step A4), the process proceeds to the Step A9 in order to skip the charge reservation support processing (Steps A5 to A8), and when the touch operation of the software key (YES button) is performed and the search request is issued (YES in the Step A4), the process proceeds to the charge reservation support processing (Steps A5 to A8). First, an inquiry of the charge reservation status is performed (Step A6) by receiving and obtaining the current position of the own mobile phone 1 from the position obtaining section 18 (Step A5) and issuing a request of the charge reservation status to the management server device 5 with the current position.

Here, on the management server device 5 side, it is checked whether or not an inquiry of the charge reservation status is received from the mobile phone 1 (Step B1 of FIG. 8), it is checked whether or not a reservation request is received (Step B5). Here, when any of the inquiry of the charge reservation status and the reservation request is not received (NO in the Steps B1 and B5), the process leaves the flow of FIG. 8, and when the inquiry of the charge reservation status is received from the mobile phone 1 (YES in the Step B1), "charging installation location" of the charge reservation database DB is searched on the basis of the current position of the inquiry source terminal, which is received with the inquiry request (Step B2).

That is, the management server device 5 searches for the plurality of charge devices 2 that exist at locations near the inquiry source terminal by referring to the charge reservation database DB, and in this case, for example, two to ten charge devices 2 are searched for as a candidate of a selection target in order of location that is closer to the inquiry source terminal. In addition, reservation support information that is related to charge reservation is generated based on the search result and the current position of the inquiry source terminal (Step B3). In this case, a map that clearly indicates the installation locations of the charge stands 2 and the current position of the mobile phone 1 and reservation support information that includes reservation times of the charge stands 2 are generated. The reservation support information that is generated as described above is transmitted to the mobile phone 1 that is the inquiry source terminal (Step B4).

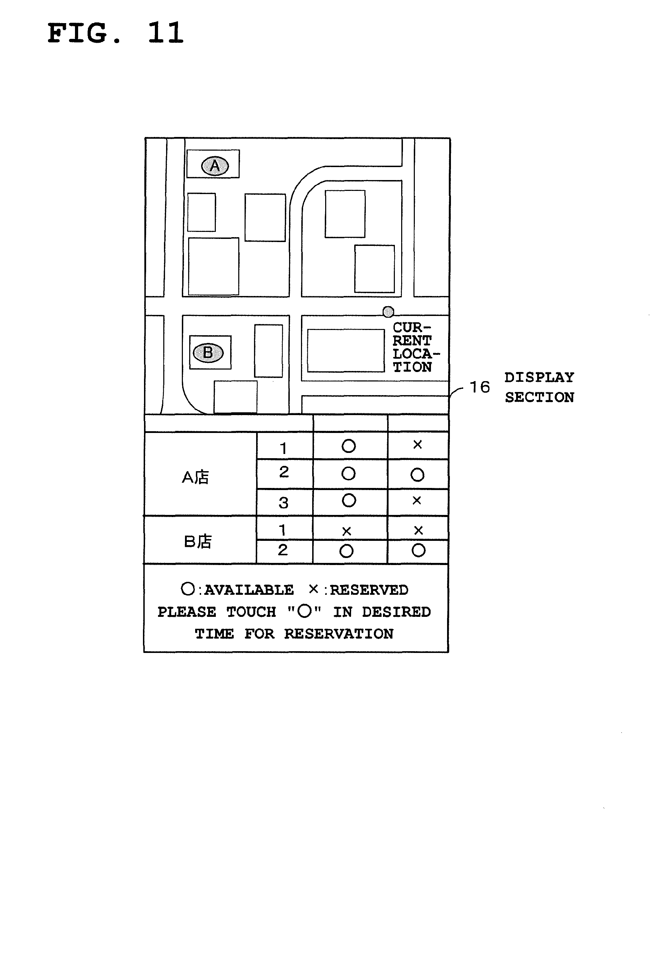

When the mobile phone 1 receives the reservation support information from the management server device 5 (Step A7 of FIG. 7), the mobile phone 1 displays the reservation support information on the display section 16 (Step A8). FIG. 11 is a diagram illustrating a reservation support screen in such a case. In a case in which the reservation support screen is a vertically long screen as illustrated in FIG. 11, in the upper half area, the map that clearly indicates the installation locations of the charge stands 2 and the current position of the mobile phone 1 is displayed, and in the lower half area, a list of the reservation times of the charge stands 2 and a message that guides how to reserve the charge stands 2. It is noted that, in the illustrated reservation time list, "○" and "×" are displayed as charge reservation statuses for next two hours (10:00 through 11:49) from the current time (9:50) correspondingly to the three charge stands 2 that are installed at the shop A and the two charge stands 2 that are installed at the shop B.

In this case, in the illustrated example, in the message that guide how to reserve the charge stand 2, "○" indicates "available stand", and "x" indicates "reserved stand", and it is guided that the position of "O" in a desired time for reservation is to be touched. In such a state, the mobile phone 1 checks whether or not the reservation is requested, that is, "O" in the reservation time list is touched (Step B9), and when the reservation is requested (YES in the Step A9), a reservation request in accordance with the touch position is generated and transmitted to the management server device 5 (Step A10). For example, in FIG. 11, when the reservation is performed for the first machine (1) at the shop A in a time from 11:00 to 11:59, a reservation request that includes the contents is transmitted to the management server device 5.

When the management server device 5 receives the reservation request from the mobile phone 1 (YES in the Step B5 of FIG. 8), the management server device 5 registers the received reservation contents and an authentication code to the corresponding position of the charge reservation database DB (Step B7) after issuing the authentication code to the mobile phone 1 (Step B6). In addition, after reservation completion notification and the authentication code are transmitted to the mobile phone 1 that is the request source (Step B8), the process leaves the flow of FIG. 8.

When the mobile phone 1 receives the reservation completion notification and the authentication code from the management server device 5 (Step A11 of FIG. 7), the mobile phone 1 causes the display section 16 to display reservation completion and causes the storage section 13 to store the authentication code (Step A12), and the process leaves the flow of FIG. 7.

FIG. 9 (1) to (3) are flowcharts illustrating operations of the mobile phone 1, the charge stand 2, and the management server device 5 at the time of charging. Here, FIG. 9 (1) is a flowchart illustrating an operation on the mobile phone 1 side, which is sequentially executed and started for certain timing. FIG. 9 (2) is a flowchart illustrating an operation of the charge stand 2, which is sequentially executed and started for certain timing. FIG. 9 (3) is a flowchart illustrating an operation on the management server device 5 side, which is sequentially executed and started for certain timing.

First, the charge stand 2 checks whether or not the mobile phone 1 is mounted on (connected to) the charge stand 2, by the connection detection section 23C (Step C1 in FIG. 9 (2)), and when it is detected that the mobile phone 1 is mounted on (connected to) the charge stand 2 (YES in the Step C1), the charge stand 2 issues a transmission request of the authentication code to the mobile phone 1 through the non-contact communication section 27 (Step C2).

When the mobile phone 1 receives the request of the authentication code from the charge stand 2 through the non-contact communication section 19 (YES in the Step A13 of FIG. 9 (1)), the mobile phone 1 reads the authentication code that is stored in the storage section 13 and transmits the authentication code to the charge stand 2 through the non-contact communication section 19 (Step A14), and the process leaves the flow of FIG. 9 (1).

When the charge stand 2 receives the authentication code from the mobile phone 1 (Step C3 of FIG. 9 (2)), the charge stand 2 transmits the authentication code from the communication section 24 to the management server device 5 through the network 4 (Step C4).

When the management server device 5 receives the authentication code from the charge stand 2 (Step B9 of FIG. 9 (2)), the management server device 5 judges whether or not the reservation is valid, on the basis of the received authentication code, and transmits the judgment result to the charge stand 2 (Step B10). At that time, when the reservation is valid, the management server device 5 reads a reservation time that corresponds to the authentication code from the charge reservation database DB, transmits the reservation time to the charge stand 2 with the judgment result, and transmits a charging control signal (a charging start instruction or a charging termination instruction) that corresponds to the judgment result to the charge stand 2.

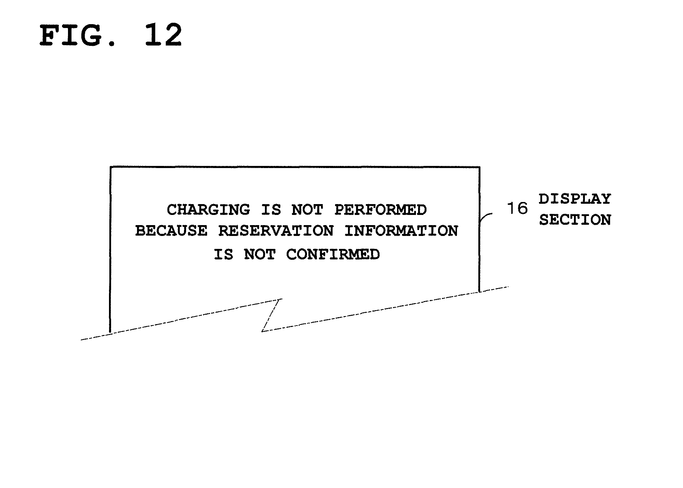

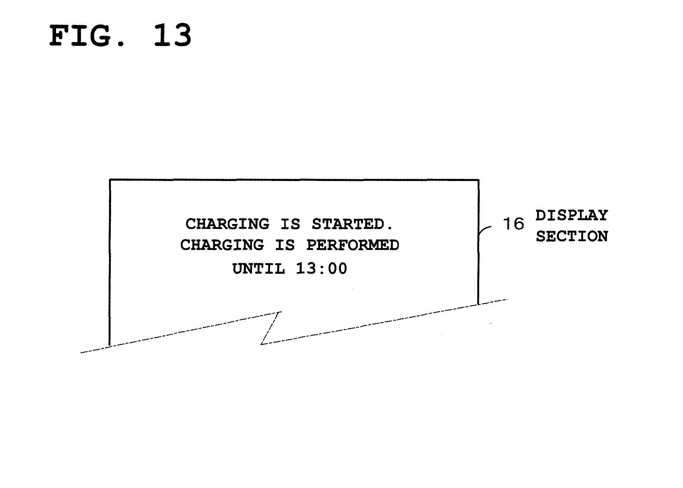

When the charge stand 2 receives the judgment result, the reservation time (when the reservation is valid), the charging control signal from the management server device 5 through the communication section 24 (Step C5 of FIG. 9 (2)), the charge stand 2 checks whether or not the judgment result is OK (valid reservation) (Step C6), and when the judgment result is NG (invalid reservation) (NO in the Step C6), the charge stand 2 does not start the contactless charging and displays a message that indicates that the charging is not allowed to be performed on the display section 25 (Step C7). FIG. 12 illustrates a message screen in such a case, and a message of "Charging is not performed because the reservation information is not confirmed" on the message screen. In addition, when the judgment result is OK (valid reservation) (YES in Step C6), the charge stand 2 starts the contactless charging, displays the message that indicated that the charging is allowed to be performed on the display section 25, and turns on the luminous body 26 (Step C8). FIG. 13 illustrates a message screen in such a case, and a message of "Charging is started. The charging is performed until 13:00" on the message screen.

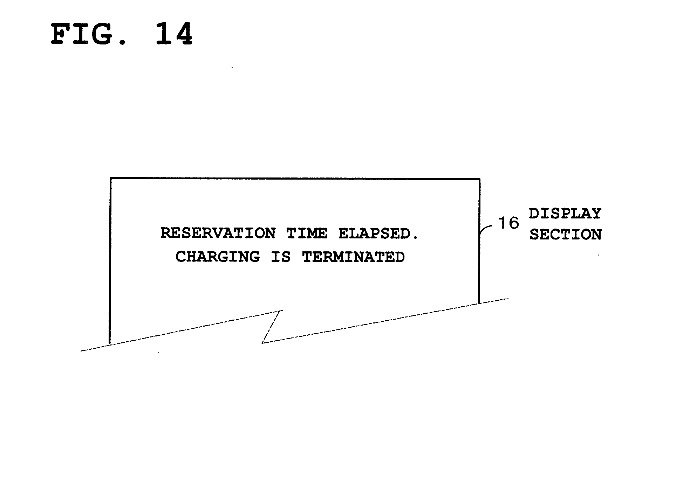

In addition, a timer (not illustrated) that is used to measure a reservation time that corresponds to the authentication code is started to check whether or not the charge reservation time has elapsed (Step C9), and the process leaves the flow of FIG. 9 (2) at the time of start of the timer. After that, after the reservation time has elapsed (YES in the Step C9), the contactless charging is terminated, and a message that indicates that the reservation time has elapsed is displayed on the display section 25, and the luminous body 26 is turned off (Step C10). FIG. 14 illustrates a message screen in such a case, and a message of "The reservation time has elapsed. The charging is terminated" on the message screen. After that, the process leaves the flow of FIG. 9 (2).

As described above, the management server device 5 that is included in the charge reservation support system according to the embodiment includes the charge reservation database DB that is used to manage the charge reservation status that includes the installation location and the reservation time for each of the mobile phones 1, searches the charge reservation database DB on the basis of the current position of the mobile phone 1 when an inquiry of the charge reservation status is received from the mobile phone 1, generates reservation support information that is related to charge reservation from the charge reservation statuses of the plurality of the charge stands 2 that exist at locations near the current position, and transmits the reservation support information to the mobile phone 1 that is the inquiry source, so that information that is used to reduce the burden of the user of the mobile phone 1 can be provided for the user, and charge reservation that is appropriate for the user can be realized. That is, because the user can confirms the installation locations that correspond to the plurality of the charge stands 2, the user can find and reserve a charge stand that exist in the traveling direction of the user and a charge stand in the vicinity of the user, from the plurality of the charge stands 2, can confirm the reservation times that correspond to the plurality of the charge stands 2, and can find and reserve a charge stand that suits the convenience of the user, so that the utilization value for the user is enhanced.

The management server device 5 generates the reservation support information that includes the map that clearly indicates the installation locations of the charge stands 2 and the current position of the mobile phone 1 and the reservation times of the charge stands 2 on the basis of the charge reservation status for each of the charge stands 2 and the current position of the mobile phone 1, so that the contents are easy to understand for user, and accurate reservation can be performed.

The management server device 5 issues an authentication code to the mobile phone 1 at the time of reservation, and obtains an authentication code from the mobile phone 1, judges whether or not the reservation is valid, and controls the charging by the charge stand 2 on the basis of the judgment result at the time of reservation execution (at the time of charging), so that the charging can be started only for the valid reservation.

The mobile phone 1 transmits the current position of the own mobile phone 1 to the management server device 5 manages the charge reservation status that includes the installation location and the reservation time for each of the charge stands 2 that are installed at the plurality of locations to perform an inquiry of the charge reservation status, and outputs reservation support information that includes the installation locations and the reservation times of the plurality of the charge stands 2 that exist at locations near the current position of the inquiry source in response to the inquiry after receiving and obtaining the reservation support information from the management server device 5, so that the information that is used to reduce the burden of the user can be provided for the user, and charge reservation that is appropriate for the user can be realized . That is, because the user can confirm the installation locations that correspond to the plurality of the charge stands 2, the user can find and reserve a charge stand that exists in the traveling direction of the user and a charge stand in the vicinity of the user, from the plurality of the charge stands 2, can confirm the reservation times that correspond to the plurality of the charge stands 2, and can find and reserve a charge stand that suits the convenience of the user, so that the utilization value for the user is enhanced.

The mobile phone 1 obtains the reservation support information that includes the map that clearly indicates the installation locations of the charge stands 2 and the current position of the mobile phone 1 and the reservation times of the charge stands 2 on the basis of the charge reservation status for each of the charge stands 2 and the current position of the mobile phone 1, so that the contents are easy to understand for user, and accurate reservation can be performed.

The mobile phone 1 transmits charge reservation for the charge stand 2 to the management server device 5 when the available charge stand 2 is specified by a user operation, and the mobile phone 1 receives, obtains, stores, and holds an authentication code that is issued by the management server device 5 when the charge reservation is accepted by the management server device 5, and the mobile phone 1 receives judgment result whether or not the reservation is valid on the management server device 5 side and outputs the judgment result in response to the transmission of the authentication code when the mobile phone 1 is connected to the charge stand 2, so that the user can check whether or not the reservation is valid.

It is noted that, in the above-described embodiments, the mobile phone 1 displays the message screen that is used to perform an inquiry to the user whether or not the nearest charge stand 2 is searched for using a case in which a battery capacity (% of remaining battery) is 20% or less (battery exhaustion is coming soon) as a condition, and transmits the search request to the management server device 5 in response to the user operation, and alternatively, the search request of the charge stand 2 may be issued at a given timing by the user operation regardless of the remaining battery.

In addition, in the above-described embodiments, a case is described above in which the mobile phone 1 is connected to the charge stand 2 by the non-contact charging process, and alternatively the contact charging system may be employed.

In addition, in the above-described embodiments, on the management server device 5 side, the charge reservation database DB is searched on the basis of the current position of the mobile phone 1 and reservation support information is generated when an inquiry of the charge reservation status is received from the mobile phone 1, and alternatively, the charge reservation status may be received and obtained from the plurality of the charge stands 2 in the vicinity of the current position of the mobile phone 1 on the basis of the current position of the mobile phone 1 and reservation support information may be generated when the charge reservation status of the own mobile phone 1 exists on the charge stand 2 side and an inquiry of the charge reservation status is received from the mobile phone 1.

In addition, in the above-described embodiments, "mounting of the mobile phone 1" may include, for example, a case in which the charge stand 2 is put on the mobile phone 1, a case in which the mobile phone 1 and the charge stand 2 that are in a state of lying on the side are brought close to each other, a case in which the mobile phone 1 and the charge stand 2 are connected to each other from a given direction so that the charging to the mobile phone 1 can be performed, for example, the mobile phone 1 is hung on a hung type charge stand 2 in addition to a case in which the mobile phone 1 is put on the charge stand 2. In this case, the whole shape of the housing of the charge stand 2 is not limited to rectangular shape, and the shape is optional.

In the above-described embodiments, as a mobile terminal device, a mobile phone is exemplified, and alternatively, for example, a given terminal device can be employed such as a personal computer, a PDA, a digital camera, a music player, a multifunction device that is obtained by combining these devices.

Each of "device", "machine", and "section" in the above-described embodiments may be divided into a plurality of housings by function, and the number of housing is not limited to the single housing. In addition, each of the Steps in the above-described flowcharts is not limited to the processing in time series, and alternatively, a plurality of Steps may be processed in parallel, and the Steps may be processed separately and independently.

As described above, the embodiments of the present invention are described, and the present invention is not limited to the embodiment and includes the scope of the invention and its equivalents as described in the claims.

In addition, a part or all of the above-described embodiments can be described as described in the following supplementary notes, however, the embodiments are not limited to the supplementary notes.

### (Supplementary Note 1)

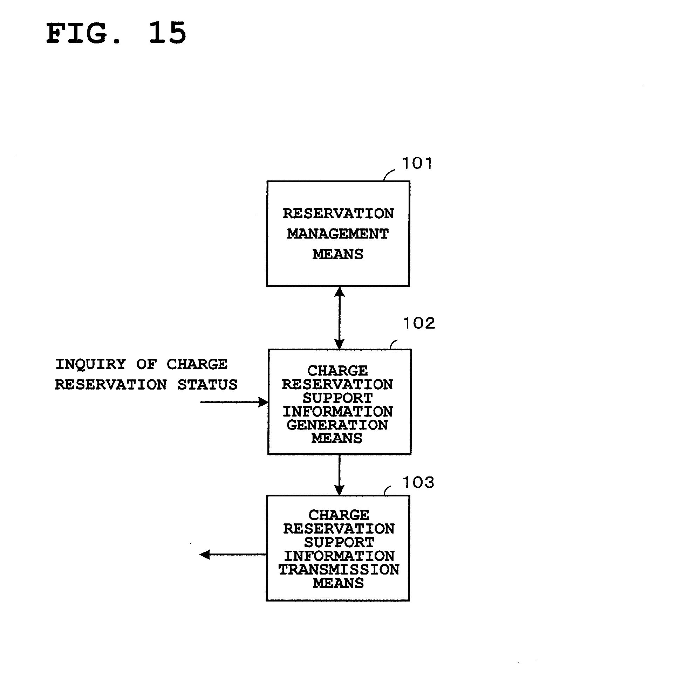

FIG. 15 is a configuration diagram of Supplementary Note 1. As described in FIG. 15, the invention illustrated in Supplementary Note 1 is
a charge reservation support system that includes charge devices that are installed at a plurality of locations, a mobile terminal device that includes a charge function to charge a secondary battery by electric power supply from the charge device, a management device that manages each of the charge devices, and performs reservation support when the charging of the mobile terminal device 101 is reserved, the charge reservation support system including
a reservation management means 100 for managing a charge reservation status including an installation location and a reservation time for each of the charge devices (the charge reservation database DB in FIG. 1 and FIG. 4, the central control section 51 and the storage section 53 of the management server device 5 in FIG. 4),
a generation means 102 for, when an inquiry regarding a charge reservation status is received from the mobile terminal device, searching for the charge reservation status based on a current position of the mobile terminal device and generating reservation support information related to charge reservation from charge reservation statuses of a plurality of charge devices present at locations near the current position (the central control section 51 and the storage section 53 of the management server device 5 in FIG. 4), and
a transmission means 103 for transmitting the reservation support information generated by the generation means 102 to the mobile terminal device that is an inquiry source (the central control section 51, the storage section 53, and the communication section 54 of the management server device 5 in FIG. 4)

### (Supplementary Note 2)

The charge reservation support system according to claim 1,
wherein the generation means generates reservation support information including a map which clearly indicates the installation locations of the charge devices and the current position of the mobile terminal device and reservation times of the charge devices, based on the charge reservation status for each of the charge devices and the current position of the mobile terminal device.

### (Supplementary Note 3)

The charge reservation support system according to claim 1 or 2, further comprising:
a notification means for notifying the mobile terminal device which is the request source of reservation completion and authentication data which is used to confirm, at the time of charging, which reservation is valid, when a reservation request of charging is received from the mobile terminal device by the acceptance means;
a judgment means for judging whether or not the reservation is valid based on the authentication data obtained from the mobile terminal device, when the mobile terminal device is connected to the charge device; and
a control means for controlling charging to the mobile terminal device by the charge device based on the judgment result by the judgment means.

### (Supplementary Note 4)

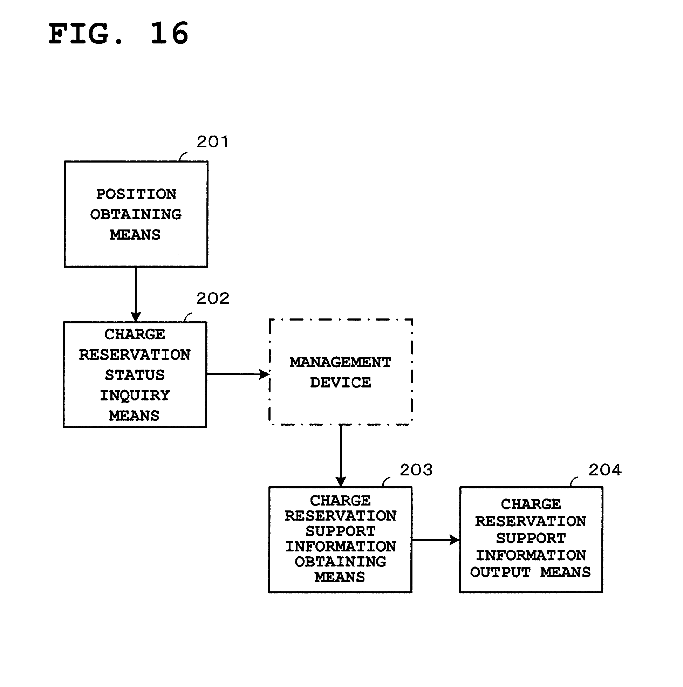

FIG. 16 is a configuration diagram of Supplementary Note 4. As described in FIG. 16, the invention illustrated in Supplementary Note 4 is a mobile terminal device that includes a charge function to charge a secondary battery by electric power supply from a charge device, the mobile terminal device including
a position obtaining means 201 for obtaining a current position of the mobile terminal device (the central control section 11, the position obtaining section 18, and the storage section 13 in FIG. 2),
an inquiry means 202 for making an inquiry regarding a charge reservation status by transmitting the current position obtained by the position obtaining means to a management device which manages a charge reservation status including an installation location and a reservation time for each of charge devices installed at a plurality of locations (the central control section 11, the storage section 13, and the communication section 14 in FIG. 2),
an obtaining means 203 for receiving and obtaining reservation support information related to charge reservation including installation locations and reservation times of a plurality of charges devices present at locations near the current position of the inquiry source in response to the inquiry regarding the charge reservation status made by the inquiry means, from the management device (the central control section 11, the storage section 13, and the communication section 14 in FIG. 2), and
an output means 204 for outputting the reservation support information received and obtained by the obtaining means (the central control section 11, the storage section 13, and the display section 16 in FIG. 2).

### (Supplementary Note 5)

The mobile terminal device according to claim 4, wherein the obtaining means receives and obtains reservation support information including a map which clearly indicates the installation locations of the plurality of charge devices and the current position of the mobile terminal device and reservation times of the plurality of charge devices, from the management device.

### (Supplementary Note 6)

The mobile terminal device according to claim 4 or 5, further comprising:
a first transmission means for transmitting, when an available charge device for which a charge reservation has not been made is specified by a user operation from the reservation support information outputted by the output means, a charge reservation for the charge device to the management device;
a holding means for storing and holding authentication data received and obtained from the management device when the charge reservation is accepted;
a second transmission means for transmitting the authentication data stored and held in the holding means to the management device via the charge device, when the mobile terminal device is connected to the charge device; and
a reception means for receiving a judgment result when a judgment regarding whether or not the reservation is valid is made on the management device side in response to transmission of the authentication data,
wherein the output means outputs the judgment result received by the reception means.

### (Supplementary Note 7)

A charge reservation support method for performing reservation support when charging of a mobile terminal device comprising a charge function to charge a secondary battery by electric power supply from a charge device is reserved, the charge reservation support method comprising:
managing a charge reservation status including an installation location and a reservation time for each of charge devices installed at a plurality of locations;
searching for, when an inquiry regarding a charge reservation status is received from the mobile terminal device, the charge reservation status based on a current position of the mobile terminal device and generating reservation support information related to charge reservation from charge reservation statuses of a plurality of charge devices present at locations near the current position; and
transmitting the generated reservation support information to the mobile terminal device which is an inquiry source.

### (Supplementary Note 8)

A charge reservation support method for performing reservation support when charging of a mobile terminal device comprising a charge function to charge a secondary battery by electric power supply from a charge device is reserved, the charge reservation support method comprising:
making an inquiry regarding a charge reservation status by transmitting a current position of the mobile terminal device to a management device which manages a charge reservation status including an installation location and a reservation time for each of charge devices installed at a plurality of locations;
receiving and obtaining reservation support information related to charge reservation including installation locations and reservation times of a plurality of charge devices present at locations near the current position of the inquiry source in response to the inquiry regarding the charge reservation status, from the management device; and
outputting the received and obtained reservation support information.

### (Supplementary Note 9)

A program which causes a computer to actualize functions comprising:
a function for managing a charge reservation status including an installation location and a reservation time for each of charge devices installed at a plurality of locations;
a function for, when an inquiry regarding a charge reservation status is received from a mobile terminal device, searching for the charge reservation status based on a current position of the mobile terminal device and generating reservation support information related to charge reservation from charge reservation statuses of a plurality of charge devices present at locations near the current position; and
a function for transmitting the generated reservation support information to the mobile terminal device which is an inquiry source.

### (Supplementary Note 10)

A program which causes a computer to actualize functions comprising:
a function for making an inquiry regarding a charge reservation status by transmitting a current position of a mobile terminal device to a management device which manages a charge reservation status including an installation location and a reservation time for each of charge devices installed at a plurality of locations;
a function for receiving and obtaining reservation support information related to charge reservation including installation locations and reservation times of a plurality of charge devices present at locations near the current position of the inquiry source in response to the inquiry regarding the charge reservation status, from the management device; and
a function for outputting the received and obtained reservation support information.

### DESCRIPTION OF REFERENCE NUMERALS

- 1: MOBILE PHONE
- 2: CHARGE STAND
- 5: MANAGEMENT SERVER DEVICE
- 4: NETWORK
- 11, 21, 51: CENTRAL CONTROL SECTION
- 13, 22, 53: STORAGE SECTION
- 12: POWER SOURCE SECTION
- 12A: CHARGING CIRCUIT SECTION
- 12B: SECONDARY CHARGE COIL
- 12C: REMAINING BATTERY DETECTION SECTION
- 14, 24, 54: COMMUNICATION SECTION
- 16, 25: DISPLAY SECTION
- 18: POSITION OBTAINING SECTION
- 19, 27: NON-CONTACT COMMUNICATION SECTION
- 23: CHARGE SECTION
- 23A, 23B: PRIMARY CHARGE COIL
- 23C: CONNECTION DETECTION SECTION
- DB: CHARGE RESERVATION DATABASE

## Claims

1. A charge reservation support system which comprises charge devices which are installed at a plurality of locations, a mobile terminal device which comprises a charge function to charge a secondary battery by electric power supply from the charge device, and a management device which manages each of the charge devices, and performs reservation support when charging of the mobile terminal device is reserved, the charge reservation support system comprising:
a reservation management means for managing a charge reservation status including an installation location and a reservation time for each of the charge devices;
a generation means for, when an inquiry regarding a charge reservation status is received from the mobile terminal device, searching for the charge reservation status based on a current position of the mobile terminal device, and generating reservation support information related to charge reservation from charge reservation statuses of a plurality of charge devices present at locations near the current position; and
a transmission means for transmitting the reservation support information generated by the generation means to the mobile terminal device which is an inquiry source.

2. The charge reservation support system according to claim 1, wherein the generation means generates reservation support information including a map which clearly indicates the installation locations of the charge devices and the current position of the mobile terminal device and reservation times of the charge devices, based on the charge reservation status for each of the charge devices and the current position of the mobile terminal device.

3. The charge reservation support system according to claim 1 or 2, further comprising:
a notification means for notifying the mobile terminal device which is the request source of reservation completion and authentication data which is used to confirm, at the time of charging, which reservation is valid, when a reservation request of charging is received from the mobile terminal device by the acceptance means;
a judgment means for judging whether or not the reservation is valid based on the authentication data obtained from the mobile terminal device, when the mobile terminal device is connected to the charge device; and
a control means for controlling charging to the mobile terminal device by the charge device based on the judgment result by the judgment means.

4. A mobile terminal device which comprises a charge function to charge a secondary battery by electric power supply from a charge device, the mobile terminal device comprising:
a position obtaining means for obtaining a current position of the mobile terminal device;
an inquiry means for making an inquiry regarding a charge reservation status by transmitting the current position obtained by the position obtaining means to a management device which manages a charge reservation status including an installation location and a reservation time for each of charge devices installed at a plurality of locations;
an obtaining means for receiving and obtaining reservation support information related to charge reservation including installation locations and reservation times of a plurality of charge devices present at locations near the current position of the inquiry source in response to the inquiry regarding the charge reservation status made by the inquiry means, from the management device; and
an output means for outputting the reservation support information received and obtained by the obtaining means.

5. The mobile terminal device according to claim 4, wherein the obtaining means receives and obtains reservation support information including a map which clearly indicates the installation locations of the plurality of charge devices and the current position of the mobile terminal device and reservation times of the plurality of charge devices, from the management device.

6. The mobile terminal device according to claim 4 or 5, further comprising:
a first transmission means for transmitting, when an available charge device for which a charge reservation has not been made is specified by a user operation from the reservation support information outputted by the output means, a charge reservation for the charge device to the management device;
a holding means for storing and holding authentication data received and obtained from the management device when the charge reservation is accepted;
a second transmission means for transmitting the authentication data stored and held in the holding means to the management device via the charge device, when the mobile terminal device is connected to the charge device; and
a reception means for receiving a judgment result when a judgment regarding whether or not the reservation is valid is made on the management device side in response to transmission of the authentication data,
wherein the output means outputs the judgment result received by the reception means.

7. A charge reservation support method for performing reservation support when charging of a mobile terminal device comprising a charge function to charge a secondary battery by electric power supply from a charge device is reserved, the charge reservation support method comprising:
managing a charge reservation status including an installation location and a reservation time for each of charge devices installed at a plurality of locations;
searching for, when an inquiry regarding a charge reservation status is received from the mobile terminal device, the charge reservation status based on a current position of the mobile terminal device and generating reservation support information related to charge reservation from charge reservation statuses of a plurality of charge devices present at locations near the current position; and
transmitting the generated reservation support information to the mobile terminal device which is an inquiry source.

8. A charge reservation support method for performing reservation support when charging of a mobile terminal device comprising a charge function to charge a secondary battery by electric power supply from a charge device is reserved, the charge reservation support method comprising:
making an inquiry regarding a charge reservation status by transmitting a current position of the mobile terminal device to a management device which manages a charge reservation status including an installation location and a reservation time for each of charge devices installed at a plurality of locations;
receiving and obtaining reservation support information related to charge reservation including installation locations and reservation times of a plurality of charge devices present at locations near the current position of the inquiry source in response to the inquiry regarding the charge reservation status, from the management device; and
outputting the received and obtained reservation support information.

9. A program which causes a computer to actualize functions comprising:
a function for managing a charge reservation status including an installation location and a reservation time for each of charge devices installed at a plurality of locations;
a function for, when an inquiry regarding a charge reservation status is received from a mobile terminal device, searching for the charge reservation status based on a current position of the mobile terminal device and generating reservation support information related to charge reservation from charge reservation statuses of a plurality of charge devices present at locations near the current position; and
a function for transmitting the generated reservation support information to the mobile terminal device which is an inquiry source.

10. A program which causes a computer to actualize functions comprising:
a function for making an inquiry regarding a charge reservation status by transmitting a current position of a mobile terminal device to a management device which manages a charge reservation status including an installation location and a reservation time for each of charge devices installed at a plurality of locations;
a function for receiving and obtaining reservation support information related to charge reservation including installation locations and reservation times of a plurality of charge devices present at locations near the current position of the inquiry source in response to the inquiry regarding the charge reservation status, from the management device; and
a function for outputting the received and obtained reservation support information.
